# EUROPEAN PATENT APPLICATION

(11) **EP 2 913 972 A1**
(43) Date of publication of application: **02.09.2015**
(21) Application number: 13852323.8
(22) Date of filing: 12.08.2013
(51) Int. Cl.: H04L 29/06

(54) **RESOURCE SUBSCRIPTION METHOD AND DEVICE**

(30) Priority: 29.10.2012 CN 201210424428
(71) Applicant: ZTE Corporation, Shenzhen, Guangdong 518057 (CN)
(72) Inventor: FAN, Xianyou, Shenzhen Guangdong 518057 (CN)
(74) Representative: Modiano, Micaela Nadia
(86) International application number: PCT/CN2013/081314
(87) International publication number: WO 2014/067311

(57) **Abstract**

A resource subscription method and a resource subscription device are provided. In the method, a server receives a request message from a client, wherein the request message includes a subscription condition, and the subscription condition includes whether to receive a notification message for addition and/or deletion of one or more resources in a resource directory or not; and the server subscribes or cancels subscription to a resource directory for the client according to the request message. By virtue of the solution, the subscription to the resources is realized according to the directory, and the notification message for the addition and/or deletion of one or more resources in the resource directory is transmitted to the client according to a specific requirement of the client, so that an loT terminal can be flexibly managed through a Restful-style interface. The solution is particularly suitable for the condition of dynamic addition and/or deletion of one or more resources on terminal equipment, and the client can timely learn about addition and/or deletion conditions of one or more resources, thereby improving access efficiency and reducing network overhead.

## Description

### Technical Field

The present invention relates to the field of communication, in particular to a resource subscription method and a resource subscription device.

### Background

The Internet of Things (IoT) literally means an Internet for the connection of things. Currently, a popular definition to the loT is: a network capable of realizing interconnection and intercommunication between things or between humans and things through a basic network by virtue of a sensing element, such as a radio frequency identifier, a sensor, a two-dimensional code identifier or a scanner, and allowing the access and interaction of any human or thing to any service by any means at any time anywhere.

The loT integrates numerous smart things, and in order to access the things and achieve high intercommunity between the things, a smart-thing-based Internet Protocol (IP) is a great trend. However, these smart things are usually low in computing processing capacity and sensitive to resource consumption, while protocols now applied to the Internet are excessively complex and large in overhead, and can difficultly meet requirements of application scenarios of the IoT. In addition, the loT needs the access of a large amount of heterogeneous terminal equipment, so that a universal, simple and flexible mode is required.

A Restful mode, used as an access interface, has been widely accepted and popularized in the field of loT, and is selected as a standard for the access interface by the European Telecommunications Standards Institute (ETSI). The Internet Engineering Task Force (IETF) sets up a Constrained Restful Environment (CoRE) working team dedicated to making researches on a Constrained Application Protocol (CoAP) suitable for the constraint environment.

Subscription is a common mechanism, and is more widely applied to the IoT. For example, if subscription to a temperature value is provided for a certain temperature sensor, a notice is transmitted to a subscriber when temperature changes or exceeds a certain threshold value. However, for a conventional Restful-style protocol, a subscription mechanism defined on a protocol level is for a specific resource, and in other words, subscription to the resource can be realized only when there is a definite resource identifier, and subscription to a resource which has not been created yet cannot be realized because its identifier is unknown. The neighbor node information of a sensing node is taken as an example, each piece of neighbor node information is abstracted into a single resource, and because neighbor nodes are dynamically increased or reduced, a visitor in need to be timely notified when there are new nodes added into or leaving a network possibly knows a directory where the neighbor node information resources are stored, but cannot know specific identifiers of new neighbor node information resources.

At present, there is yet no effective solution to the problem.

### Summary

The present invention provides a resource subscription method and a resource subscription device, so as to at least solve the problem of inconvenience for subscription due to the fact that a definite resource identifier is required by the subscription to a specific resource and a client cannot timely obtain an identifier of an added or deleted resource in the related art.

According to one embodiment of the present invention, a resource subscription method is provided, including that: a server receives a request message from a client, wherein the request message includes a subscription condition, and the subscription condition includes whether to receive a notification message for addition and/or deletion of one or more resources in a resource directory or not; and the server subscribes or cancels subscription to the resource directory for the client according to the request message.

In an example embodiment, the request message further includes: information for indicating the subscription or subscription cancellation of the resource directory, and the server subscribing or canceling the subscription to the resource directory for the client according to the request message includes that: the server judges whether the client requests to subscribe to the resource directory or cancel the subscription to the resource directory according to the request message; when the client requests to subscribe to the resource directory, the server performs a subscription operation according to whether the subscription to the resource directory is allowed or not; and when the client requests to cancel the subscription to the resource directory, the server deletes the client from a subscriber set of the resource directory.

In an example embodiment, the server performing the subscription operation according to whether the subscription to the resource directory is allowed or not includes that: when the subscription to the requested resource directory is allowed, the server records an IP address and port information of the client, and adds the client into the subscriber set of the resource directory; and when the subscription to the requested resource directory is not allowed or supported, the server returns a resource identifier set under the resource directory to the client.

In an example embodiment, under the condition that the subscription to the requested resource directory is allowed, after the server adds the client into the subscriber set of the resource directory, the method further includes that: the server returns the resource identifier set under the resource directory to the client, and carries a parameter indicating that the server has accepted a subscription request of the client in a returned message, wherein the parameter includes: the subscription to the resource directory and/or a subscription condition.

In an example embodiment, when the server receives a subscription request from the same client for many times, a previous subscription condition is covered by a new subscription condition.

In an example embodiment, the subscription condition further includes: information for indicating whether contents of one or more added resources are required to be included in the notification message or not, and after the server subscribes to the resource directory for the client according to the request message, the method further includes that: when one or more resources are added into and/or deleted from the resource directory, the server transmits the notification message to one or more clients subscribing to directories of each level to which the one or more resources belong, wherein the notification message carries one or more added resource identifiers and/or one or more deleted resource identifiers; and the server determines whether the contents of the one or more added resources are required to be carried in the notification message or not according to the respective subscription conditions of the one or more clients.

According to another embodiment of the present invention, a resource subscription device is provided, which is applied to a server, the resource subscription device including: a receiving module, configured to receive a request message from a client, wherein the request message includes a subscription condition, and the subscription condition includes whether to receive a notification message for the addition and/or deletion of one or more resources in a resource directory or not; and a subscription module, configured to subscribe or cancel subscription to the resource directory for the client according to the request message.

In an example embodiment, the request message further includes: information for indicating the subscription or subscription cancellation of the resource directory, and the subscription module includes: a judgment unit, configured to judge whether the client requests to subscribe to the resource directory or cancel the subscription to the resource directory according to the request message; an execution unit, configured to, under a condition that the client requests to subscribe to the resource directory, judge whether the subscription to the resource directory is allowed or not; and a deletion unit, configured to, under the condition that the client requests to cancel the subscription to the resource directory, delete the client from a subscriber set of the resource directory.

In an example embodiment, the execution unit includes: an addition subunit, configured to, under the condition that the subscription to the requested resource directory is allowed, record an IP address and port information of the client and add the client into the subscriber set of the resource directory; and a first returning subunit, configured to, under the condition that the subscription to the requested resource directory is not allowed or supported, return a resource identifier set under the resource directory to the client.

In an example embodiment, the execution unit further includes: a second returning subunit, configured to, under the condition that the subscription to the requested resource directory is allowed and after the addition subunit adds the client into the subscriber set of the resource directory, return a resource identifier set under the resource directory to the client and carry a parameter indicating that the server has accepted a subscription request of the client in a returned message, wherein the parameter includes: the subscription to the resource directory and/or a subscription condition.

In an example embodiment, the subscription condition further includes: information for indicating whether contents of one or more added resources are required to be included in the notification message or not, and the device further includes: a transmission module, configured to, when one or more resources are added into and/or deleted from the resource directory, transmit the notification message to one or more clients subscribing to directories of each level to which the one or more resources belong, wherein the notification message carries one or more added resource identifiers and/or one or more deleted resource identifiers; and a determination module, configured to determine whether the contents of the one or more added resources are required to be carried in the notification message or not according to the respective subscription conditions of the one or more clients.

By virtue of the above embodiments of the present invention, the subscription to the resources is realized according to the directory, and the notification message for the addition and/or deletion of one or more resources in the resource directory is transmitted to the client according to a specific requirement of the client, so that an loT terminal can be flexibly managed through a Restful-style interface. The method and the device are particularly suitable for the condition of dynamic addition and/or deletion of one or more resources on terminal equipment, and the client can timely learn about addition and/or deletion conditions of the one or more resources, thereby improving access efficiency and reducing network overhead.

### Brief Description of the Drawings

The drawings are described here to provide further understanding of the present invention, and form a part of the present invention. The schematic embodiments and description of the present invention are adopted to explain the present invention, and do not form improper limits to the present invention. In the drawings:
Fig. 1 is a flowchart of a resource subscription method according to an embodiment of the present invention;
Fig. 2 is a flowchart of a resource subscription method according to an example embodiment of the present invention;
Fig. 3 is a structure diagram of a resource subscription device according to an embodiment of the present invention;
Fig. 4 is a first structure diagram of a resource subscription device according to an example embodiment of the present invention; and
Fig. 5 is a second structure diagram of a resource subscription device according to an example embodiment of the present invention.

### Detailed Description of the Embodiments

It is important to note that the embodiments of the present invention and the characteristics in the embodiments can be combined under the condition of no conflicts. The present invention is described below with reference to the drawings and embodiments in detail.

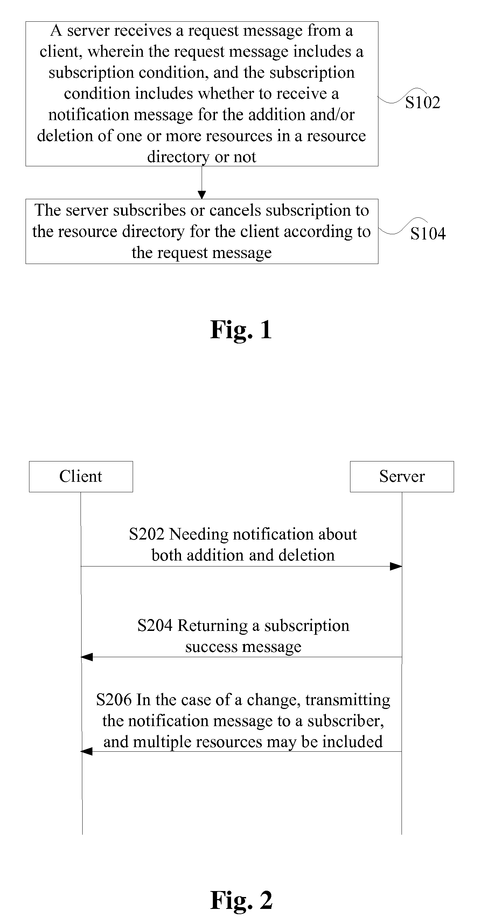

An embodiment of the present invention provides a resource subscription method. Fig. 1 is a flowchart of a resource subscription method according to an embodiment of the present invention. As shown in Fig. 1, the method includes the following S102 to S104.

In S102, a server receives a request message from a client, wherein the request message includes a subscription condition, and the subscription condition includes whether to receive a notification message for the addition and/or deletion of one or more resources in a resource directory or not.

In S104, the server subscribes or cancels subscription to the resource directory for the client according to the request message.

In a related art, for subscription to a specific resource, a definite resource identifier is required, and the client cannot timely obtain an added or deleted resource identifier, so that inconvenience is brought to the subscription. According to the embodiment of the present invention, the subscription to the resources is realized according to the directory, and the notification message for the addition and/or deletion of one or more resources in the resource directory is transmitted to the client according to a specific requirement of the client, so that an loT terminal can be flexibly managed through a Restful-style interface. The method is particularly suitable for the condition of dynamic addition and/or deletion of one or more resources on terminal equipment, the client can timely learn about addition and/or deletion conditions of the one or more resources, thereby improving access efficiency and reducing network overhead.

According to an example embodiment, the request message may further include: information for indicating the subscription or subscription cancellation of the resource directory, and the server subscribing or canceling the subscription to the resource directory for the client according to the request message includes that: the server judges whether the client requests to subscribe to the resource directory or cancel the subscription to the resource directory according to the request message; if the client requests to subscribe to the resource directory, the server performs a subscription operation according to whether the subscription to the resource directory is allowed or not; and if the client requests to cancel the subscription to the resource directory, the server deletes the client from a subscriber set of the resource directory.

In an example embodiment, the server performing the subscription operation according to whether the subscription to the resource directory is allowed or not includes that: if the subscription to the requested resource directory is allowed, the server records an IP address and port information of the client, and adds the client into the subscriber set of the resource directory; and if the subscription to the requested resource directory is not allowed or supported, the server returns a resource identifier set under the resource directory to the client.

Under the condition that the subscription to the requested resource directory is allowed, after the server adds the client into the subscriber set of the resource directory, the method further includes that: the server returns the resource identifier set under the resource directory to the client, and carries a parameter indicating that the server has accepted a subscription request of the client in a returned message, wherein the parameter includes: the subscription to the resource directory and/or a subscription condition. During practical application, the server may return a resource list under the resource directory, i.e. the identifier set of all the resources under the directory, to the client.

During the practical application, if the subscription to the directory requested by a subscription request message is allowed, after the client is added into a subscriber list, the subscription request message is processed as an ordinary request for access to the directory, and the resource identifier set under the directory is returned to the client. In this embodiment, a parameter indicating that the server has accepted the subscription request is carried in the returned message. If the subscription to the directory requested by the subscription request message is not allowed or supported, only the resource list under the directory is returned to the client, and the subscription request message is processed as the ordinary request for access to the resource directory.

In order to provide precise subscription service, the server may process the latest subscription request of the client, that is, if the server receives a subscription request from the same client for many times, a previous subscription condition is covered by a new subscription condition.

According to the example embodiment, the subscription condition may further include: information for indicating whether contents of one or more added resources are required to be included in the notification message or not, and after the server subscribes to the resource directory for the client according to the request message, the method further includes that: when one or more resources are added into and/or deleted from the resource directory, the server transmits the notification message to one or more clients subscribing to directories of each level to which the one or more resources belong, wherein the notification message carries one or more added resource identifiers and/or one or more deleted resource identifiers; and the server determines whether the contents of the one or more added resources are required to be carried in the notification message or not according to the respective subscription conditions of the one or more clients. In the example embodiment, whether the contents of the one or more added resources and/or contents of the one or more deleted resources are required to be carried in the notification message or not is determined according to the subscription condition in the request of the client. If a user wants to be notified of the contents, the change of one or more resources in the resource directory to which the client subscribes and the changed contents can be timely notified to the client. It is important to note that the contents of one or more deleted resources may also be carried in the notification message according to needs of the client.

From the description above, the embodiment of the present invention subscribes to the resources according to the directory based on a Restful style by adopting a mode of communication between the client and the server, and a specific technical scheme is as follows.

A client node transmits a request message for accessing a certain resource directory. In this example embodiment, the request message may at least include two parameters: one indicates that the request message requests the subscription or subscription cancellation of the directory; and the other represents the subscription condition indicating that the client node wants to receive the notification message for the addition and/or deletion of one or more resources, and in addition, the subscription condition also indicates whether the contents of one or more resources are required to be included in the notification message or not.

After receiving the request message, a server node, if determining that the request message is a subscription request message and the subscription to the requested directory is allowed, records an IP address and port information of the client node, adds the client node into the subscriber list, processes the request message as an ordinary request for access to the directory, and returns the resource list under the directory to the client node, wherein the a parameter may be included in the returned message to indicate that the server node has accepted the subscription request. If the subscription to the requested directory is not allowed or supported, the server node only returns the resource list under the directory to the client node, and processes the request message as the ordinary request for access to the resource directory.

In order to make clearer the technical scheme and an implementation method of the present invention, an implementation process is described below with reference to the example embodiments in detail.

The IETF sets up a CoRE working team dedicated to designing an IP-based CoAP, and has published a first Request For Comment (RFC) document RFC 6690: CoRE Link Format. The CoAP has the characteristics of: the Restful-style access interface based on User Data Protocol (UDP), the packets of which are in the binary message form, have a compact format, and result in less terminal overhead, thereby being considered as a compact edition of a Hypertext Transfer Protocol (HTTP).

According to the following example embodiments, the CoAP applicable to the loT is taken as an example for describing the technical scheme of the present invention. However, the described embodiments are obviously only a part of embodiments of the present invention, and can be applied to other REST-style protocols such as the HTTP, not limited to the CoAP.

Fig. 2 is a flowchart of a resource subscription method according to an example embodiment of the present invention. The example embodiment describes an example of implementing a directory subscription method and a notification message returning mode by extending CoAP options, i.e. the subscription to addition and deletion conditions of one or more resources under a directory.

First of all, a definition to the extended subscription options OBS-EXT is as shown in Table 1:

**Table 1**

| NO | C/E | Name | Format | Length | Default |
|---|---|---|---|---|---|
| XX | Elective | obs-ext | uint | 1B | None |

A definition to a Value part is as shown in Table 2:

**Table 2**

| 0..1 bit (type) | 2..4 (value1) | 5..7 (value2) | Remarks |
|---|---|---|---|
| 0 | - | - | Canceling the subscription |
| 1 | - | 0000 | Reserved |
| | - | 0001 | Subscribing to identifiers of added resources (only returning the identifiers of the resources to a subscriber) |
| | - | 1001 | Subscribing to the identifiers and contents of the one or more added resources |
| | - | 0010 | Subscribing to identifiers of deleted resources |
| | - | 1011 | Subscribing to the identifiers and contents of the one or more added resources; and subscribing to the identifiers of the one or more deleted resources |
| 2 | 0-7 | 0-7 | (used for subscribing to a notice) bits 2-4 represent the number of the added resources; and bits 5-7 represent the number of the deleted resources |

As shown in Fig. 2, a flow of the example embodiment includes the following S202 to S206.

In S202, a client initiates a subscription request for a directory to a server. In the example embodiment, it is acquired, from information carried in the request, that the client requires to be notified of the addition and deletion of one or more resources, that is, once one or more resources are added or deleted, the server needs to transmit a notification message to the client to notify the client of this change. A specific message format of the request may be as follows:
Ver: 1 (current version)
T: 1 (in need of acknowledgement)
OC: 4 (the number of options)
CODE: 1 (GET)
Message id: 0x1234
URI-PATH: "mgt/route" (target directory)
Token: client1
Observe: 0 (subscription options in the CoAP)
Obs-ext: 1011 (binary), type=1, value2=11; (extended options, representing that the client wants to subscribe to change conditions of one or more resources under the directory, including the identifiers and contents of the added resources and the identifiers of the deleted resources)

Specifically:
Header: GET (T=CON, Code=1, MID=0x1234)
Token: client1
Observe: 0
Uri-Path: "mgt/route"
Obs-ext: type=1, value2=11 (11=0b1011)

In S204, the server, after receiving the CoAP request and if determining that a target resource of the request is not the directory but a specific resource, ignores the extended options, and processes the request according to ordinary actions formulated in a standard (or a draft). If the request is the request for the subscription to the directory, the server adds the related information of the subscriber (for example, an IP address and a destination port) into a subscriber list of the directory, returns a resource list under the directory, i.e. a link-format formulated by the CoRE standard working team, to the client, and carries related parameters of the subscription in the returned message to indicate that the subscription to the directory succeeds. A specific message format may be as follows:
Ver: 1 (current version)
T: 2 (ACK, acknowledgement message)
OC: 4 (the number of the options)
CODE: 2.05 (CONTENT)
Message id: 0x1234
Token: client1
OBSERVE: 0
OBS-EXT: extended subscription options, type=1, value2=11 (binary 1011) (representing that the client wants to subscribe to the change conditions of one or more resources under the directory, including the identifiers and contents of the added resources and the deleted resources)
Content-type: link-format
Payload: <link-format> (the resource list under the directory)

Specifically:
Header: GET (T=ACK, Code=205, MID=0x1234)
Content-type: link-format
Token: client1
Observe: 0
Obs-ext: type=1, value2=11 (11=0b1011)
Payloads: link-format

In S206, when new resources are generated or resources are deleted under the mgt/route directory and subdirectories thereof, the server transmits the notification message to the subscriber, wherein the format of the notification message may be as follows:
Ver: 1 (current version)
T: 1 (no need of acknowledgement)
OC: 9 (the number of the options)
CODE: 205 (content)
Message id:0x5678
Token: client1
Location-path: "mgt/route/entry 5" (resource identifier)
Location-path: "mgt/route/entry 6"
Location-path: "mgt/route/entry 1"
OBSERVE: 1 (the sequential number of a subscription notice)
OBS-EXT: type=2; value1=3; value2=2 (representing 3 resources are added and 2 resources are deleted). In location-path, the identifiers of the added resources are arranged before the identifiers of the deleted resources. If there are a large number of resources or the resources have a large amount of contents, the resources may be divided and sent in multiple transmissions to achieve a better effect.
Content-type: Mix (if OBS-EXT indicates that there are multiple added resources, the types, lengths and values are required to be encapsulated in the payload of the type identifier; and if OBS-EXT indicates that there is only one added resource, content-type is the actual type of the resource)
Payloads: with reference to Content-type, if contents of multiple resources are returned, payloads are encapsulated in a manner of content-type, length, and value and then returned; and if contents of only one resource are returned, the contents of the resource are directly stored in an ordinary manner.

Specifically:
Header: 2.05 (T=NCON, Code=205, MID=0x5678)
Content-type: mix
Token: client1
Obs-ext: type=2, value1=2, value2=1
(value1 =addition, value2=deletion)
Location-path: "mgt/route/entry 5"
Location-path: "mgt/route/entry 6"
Location-path: "mgt/route/entry 1"
Payloads: content-type; value; length;
   content-type; value; length

It is important to note that the steps shown in the flowcharts in the drawings can be executed in a computer system, for example, a group of computers, capable of executing an instruction, and moreover, although a logic sequence is shown in the flowcharts, the shown or described steps can be executed according to a sequence different from the logic sequence under a certain condition.

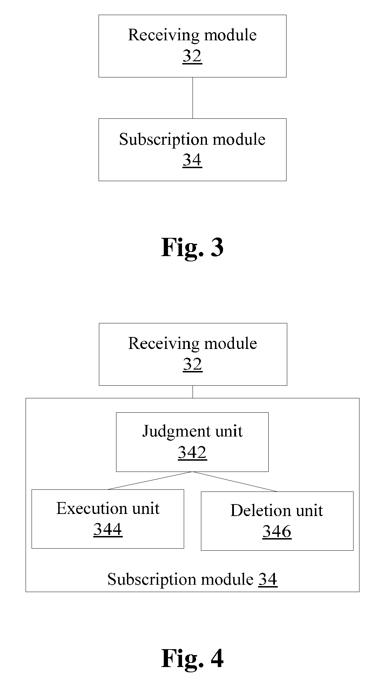

An embodiment of the present invention also provides a resource subscription device, which is applied to a server and may be used for implementing the resource subscription method. Fig. 3 is a structure diagram of a resource subscription device according to an embodiment of the present invention. As shown in Fig. 3, the device includes a receiving module 32 and a subscription module 34. The structure of the device is described below in detail.

The receiving module 32 is configured to receive a request message from a client, wherein the request message includes a subscription condition, and the subscription condition includes whether to receive a notification message for the addition and/or deletion of one or more resources in a resource directory or not; and the subscription module 34 is coupled to the receiving module 32, and is configured to subscribe or cancel subscription to the resource directory for the client according to the request message received by the receiving module 32.

As shown in Fig. 4, the request message further includes: information for indicating the subscription or subscription cancellation of the resource directory, and the subscription module 34 includes: a judgment unit 342, configured to judge whether the client requests to subscribe to the resource directory or cancel the subscription to the resource directory according to the request message; an execution unit 344, coupled to the judgment unit 342 and configured to, under the condition that the client requests to subscribe to the resource directory, judge whether the subscription to the resource directory is allowed or not; and a deletion unit 346, coupled to the judgment unit 342 and configured to, under the condition that the client requests to cancel the subscription to the resource directory, delete the client from a subscriber set of the resource directory.

In an example embodiment, the execution unit 344 includes: an addition subunit (not shown in Fig. 4), configured to, under the condition that the subscription to the requested resource directory is allowed, record an IP address and port information of the client and add the client into the subscriber set of the resource directory; and a first returning subunit (not shown in Fig. 4), configured to, under the condition that the subscription to the requested resource directory is not allowed or supported, return a resource identifier set under the resource directory to the client.

The execution unit 344 further includes: a second returning subunit (not shown in Fig. 4), configured to, under the condition that the subscription to the requested resource directory is allowed and after the addition subunit adds the client into the subscriber set of the resource directory, return the resource identifier set under the resource directory to the client and carry a parameter indicating that the server has accepted a subscription request of the client in a returned message, wherein the parameter includes: the subscription to the resource directory and/or a subscription condition.

In an example embodiment, if the server receives a subscription request from the same client for many times, a previous subscription condition is covered by a new subscription condition.

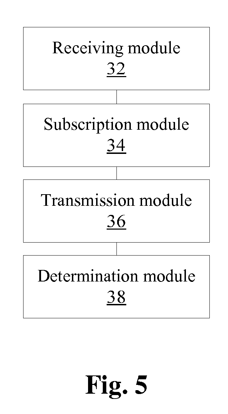

As shown in Fig. 5, the subscription condition further includes: information for indicating whether contents of one or more added resources are required to be included in the notification message or not, and the device further includes: a transmission module 36, coupled to the subscription module 34 and configured to, when one or more resources are added into and/or deleted from the resource directory, transmit the notification message to one or more clients subscribing to directories of each level to which the one or more resources belong, wherein the notification message carries one or more added resource identifiers and/or one or more deleted resource identifiers; and a determination module 38, coupled to the transmission module 36 and configured to determine whether the contents of the one or more added resources are required to be carried in the notification message or not according to the respective subscription conditions of the one or more clients.

It is important to note that the resource subscription device described in the device embodiment corresponds to the method embodiment, and a specific implementation process has been described in detail in the method embodiment, and will not be repeated here.

From the above, according to the resource subscription method and the resource subscription device in the embodiments of the present invention, the subscription to the resources is realized according to the directory, and the notification message for the addition and/or deletion of one or more resources in the resource directory is transmitted to the client according to a specific requirement of the client, so that an loT terminal can be flexibly managed through a Restful-style interface. The method and the device are particularly suitable for the condition of dynamic addition and/or deletion of one or more resources on terminal equipment, the client can timely learn about addition and/or deletion conditions of one or more resources, thereby improving access efficiency and reducing network overhead.

Obviously, a technician of the field should know that each module or step of the present invention can be implemented by a universal computing device, and the modules or steps can be concentrated on a single computing device or distributed on a network formed by a plurality of computing devices, and can optionally be implemented by programmable codes executable for the computing devices, so that the modules or steps can be stored in a storage device for execution with the computing devices, or can form each integrated circuit module, or multiple modules or steps therein can form a single integrated circuit module for implementation. As a consequence, the present invention is not limited to any specific hardware and software combination.

The above is only the example embodiment of the present invention and not intended to limit the present invention, and the technician of the field can make various modifications and variations to the present invention. Any modifications, equivalent replacements, improvements and the like within the principle of the present invention shall fall within the scope of protection defined by the appended claims of the present invention.

## Claims

1. A resource subscription method, **characterized by** comprising:
receiving, by a server, a request message from a client, wherein the request message comprises a subscription condition, and the subscription condition comprises whether to receive a notification message for addition and/or deletion of one or more resources in a resource directory or not; and
subscribing or canceling subscription, by the server, to the resource directory for the client according to the request message.

2. The method according to claim 1, **characterized in that** the request message further comprises: information for indicating the subscription or subscription cancellation of the resource directory, and subscribing or canceling the subscription, by the server, to the resource directory for the client according to the request message comprises:
judging, by the server, whether the client requests to subscribe to the resource directory or cancel the subscription to the resource directory according to the request message;
when the client requests to subscribe to the resource directory, performing, by the server, an subscription operation according to whether the subscription to the resource directory is allowed or not; and
when the client requests to cancel the subscription to the resource directory, deleting, by the server, the client from a subscriber set of the resource directory.

3. The method according to claim 2, **characterized in that** performing, by the server, the subscription operation according to whether the subscription to the resource directory is allowed or not comprises:
when the subscription to the requested resource directory is allowed, recording, by the server, an Internet Protocol (IP) address and port information of the client, and adding the client into the subscriber set of the resource directory; and
when the subscription to the requested resource directory is not allowed or supported, returning, by the server, a resource identifier set under the resource directory to the client.

4. The method according to claim 3, **characterized in that** under a condition that the subscription to the requested resource directory is allowed, after adding the client into the subscriber set of the resource directory, the method further comprises:
returning, by the server, the resource identifier set under the resource directory to the client, and carrying a parameter indicating that the server has accepted a subscription request of the client in a returned message, wherein the parameter comprises: the subscription to the resource directory and/or a subscription condition.

5. The method according to claim 1, **characterized in that** when the server receives a subscription request from the same client for many times, a previous subscription condition is covered by a new subscription condition.

6. The method according to any one of claims 1 to 5, **characterized in that** the subscription condition further comprises: information for indicating whether contents of one or more added resources are required to be carried in the notification message or not, and after subscribing, by the server, to the resource directory for the client according to the request message, the method further comprises:
when one or more resources are added into and/or deleted from the resource directory, transmitting, by the server, the notification message to one or more clients subscribing to directories of each level to which the one or more resources belong, wherein the notification message carries one or more added resource identifiers and/or one or more deleted resource identifiers; and
determining, by the server, whether the contents of the one or more added resources are required to be carried in the notification message or not according to the respective subscription conditions of the one or more clients.

7. A resource subscription device, **characterized in that** the resource subscription device is applied to a server and comprises:
a receiving module, configured to receive a request message from a client, wherein the request message comprises a subscription condition, and the subscription condition comprises whether to receive a notification message for addition and/or deletion of one or more resources in a resource directory or not; and
a subscription module, configured to subscribe or cancel subscription to the resource directory for the client according to the request message.

8. The device according to claim 7, **characterized in that** the request message further comprises: information for indicating the subscription or subscription cancellation of the resource directory, and the subscription module comprises:
a judgment unit, configured to judge whether the client requests to subscribe to the resource directory or cancel the subscription to the resource directory according to the request message;
an execution unit, configured to, under a condition that the client requests to subscribe to the resource directory, judge whether the subscription to the resource directory is allowed or not; and
a deletion unit, configured to, under a condition that the client requests to cancel the subscription to the resource directory, delete the client from a subscriber set of the resource directory.

9. The device according to claim 8, **characterized in that** the execution unit comprises:
an addition subunit, configured to, under the condition that the subscription to the requested resource directory is allowed, record an Internet Protocol (IP) address and port information of the client and add the client into the subscriber set of the resource directory; and
a first returning subunit, configured to, under a condition that the subscription to the requested resource directory is not allowed or supported, return a resource identifier set under the resource directory to the client.

10. The device according to claim 9, **characterized in that** the execution unit further comprises:
a second returning subunit, configured to, under the condition that the subscription to the requested resource directory is allowed and after the addition subunit adds the client into the subscriber set of the resource directory, return the resource identifier set under the resource directory to the client and carry a parameter indicating that the server has accepted a subscription request of the client in a returned message, wherein the parameter comprises: the subscription to the resource directory and/or a subscription condition.

11. The device according to any one of claims 7 to 10, **characterized in that** the subscription condition further comprises: information for indicating whether contents of one or more added resources are required to be carried in the notification message or not, and the device further comprises:
a transmission module, configured to, when one or more resources are added into and/or deleted from the resource directory, transmit the notification message to one or more clients subscribing to directories of each level to which the one or more resources belong, wherein the notification message carries one or more added resource identifiers and/or one or more deleted resource identifiers; and
a determination module, configured to determine whether the contents of the one or more added resources are required to be carried in the notification message or not according to the respective subscription conditions of the one or more clients.
